Europäisches Patentamt

European Patent Office

Office européen des brevets

(11) Publication number: **0 442 240 A2**

## EUROPEAN PATENT APPLICATION

(21) Application number: **90480220.4**

(22) Date of filing: **28.12.90**

(51) Int. Cl.5: **G06F 9/44**

(30) Priority: **25.01.90 US 470013**

(43) Date of publication of application:
**21.08.91 Bulletin 91/34**

(84) Designated Contracting States:
**DE FR GB IT**

(71) Applicant: **International Business Machines Corporation**
**Old Orchard Road**
**Armonk, N.Y. 10504(US)**

(72) Inventor: **Lackritz, Neal Matthew**
**550 Memorial Drive, Apt. 4E**
**Cambridge, MA 02139(US)**

(74) Representative: **Vekemans, André**
**Compagnie IBM France Département de Propriété Intellectuelle**
**F-06610 La Gaude(FR)**

(54) **Method of using natural language to program a window system.**

(57) A method of operating data processing apparatus whereby a programmer or user enters both application code and windowing directives, the latter being expressed in natural language. A parser analyzes such input and produces, in response to the directives, one or more case frames defining various functions and associated parameters. A translator converts the case frames into the specific programming language used by the windowing system, and combines such code with the application code. The result is then oonverted into machine code in order to run the application program on the window system.

FIG. 1

## METHOD OF USING NATURAL LANGUAGE TO PROGRAM A WINDOW SYSTEM

This invention relates to the field of data processing and, more particularly, to a method of using natural language to program a window system.

Window based data processing systems are known in which application programs run inside different windows. The present invention was developed for use with a windowing system known as JAWS. Such system is included in the commercially available IBM Transmission Network Manager program and is described in publication "Page, Megan, A PROGRAMMER'S GUIDE TO JAWS: A WINDOWING SYSTEM, Masters Thesis for Northwestern University, Boston, Mass., December, 1987". Program developers create application programs that will run under such a system by creating both the application program code and program code to provide the necessary and desired window functions. The programming of such a system is complex due to the numerous window function calls needed to accomplish even seemingly simple tasks. The window function calls are in a programming language that conforms to the syntactic requirements of the particular windowing system. An objective of the invention is to simplify the manner of programming a windowing system by using natural language directives.

The problem of simplifying the use of data processing systems is known. Various patents describe different solutions.

U.S. patent 4,782,463 describes a screen management system that appears to be similar to those systems which the present invention is designed to improve upon. As described in this patent, a user preparing an application program that utilizes screens, creates a program in which "calls" are made to invoke screen management subroutines. This relieves the programmer from having to know the specific detailed code necessary to effect the screen functions being called. The calls are made in the same language as that of the application program, and not in any natural language as is done in the subject invention.

M. C. Schwartz, ENGLISH LEVEL FLOWCHARTING/ PROGRAMMING SYSTEM, IBM Technical Disclosure Bulletin, Vol. 24, No. 6, Nov. 1961, pgs. 2708-2709, describes a programming system in which a programmer is relieved of having to write code in a programming language. In such system, the user creates flow charts or diagrams using natural language, and the system then converts the flow charts to the corresponding program language code. The system is not specifically designed for a windowing system and differs from the subject invention in at least two aspects. First, the published system relieves the programmer from writing any application code, whereas in the subject invention, the programmer writes both application code and the natural language directives. Second, in the published system, the application code is generated directly from the natural language flow charts and does not use the intermediate step of generating case frames as in the subject invention.

U.S. patent 4,688,195 describes a method for generating an interface with a data base management system whereby a user can employ natural language queries. The method involves providing the user with a series of prompts of words usable in the system, which the user selects. In the subject invention, no prompting is done and the result is to provide window management, not query a data base.

U.S. patent 4,460,975 described a method that relieves the user from having to provide all the detailed programming necessary to control formatting of computer printouts. The method involves outputting prompts to the user to elicit certain information on what to do. No prompting is done in the method of the present invention.

The use of natural languages in data processing is not new, as exemplified by some of the above prior art. The use of natural language allows a person to express data processing functions and goals in the language, e.g. English, which such person normally uses in everyday speech and writing. Such use is advantageous in several aspects. The user need not learn the programming language constructs, including the various commands and syntactic requirements. The user can use different expressions to achieve the same goal and is not confined to a limited programming instruction set in which there is only one command to accomplish any given function. The use of natural language simplifies many tasks.

One of the objects of the invention is to provide an improved method of programming a data processing windowing system whereby a user or programmer can enter windowing directives in a natural language, instead of having to use programming language commands specific to the windowing system.

Another object of the invention is to provide a method of programming a data processing windowing system in which windowing directives expressed in natural language are first parsed and converted to an intermediate format which is independent of the specific programming language of the windowing system.

Still another object of the invention is to provide a natural language interface to a windowing system which allows both novice and seasoned programmers and users to create and prototype windowed applications, whereby the complexity of the underlying support windowing system is transparent to such persons.

A further object is to provide a natural language interface to windowing systems whereby the same interface and input can be used with different windowing systems.

Briefly, in accordance with the invention, a programmer or user enters both application code and windowing directives, the latter being expressed in natural language. A parser analyzes such input and produces, in response to the directives, one or more action frames defining various functions and associated parameters. A translator converts the action frames into the specific programming language used by the windowing system, and combines such code with the application code. The result is then converted into machine code in order to run the application program on the window system.

Other objects and advantages of the invention will be apparent from the following description taken in connection with the accompanying drawing wherein:

Fig. 1 is a schematic block diagram of a data processing system embodying the invention; and

Fig. 2 is a flow chart of the general steps of the invention.

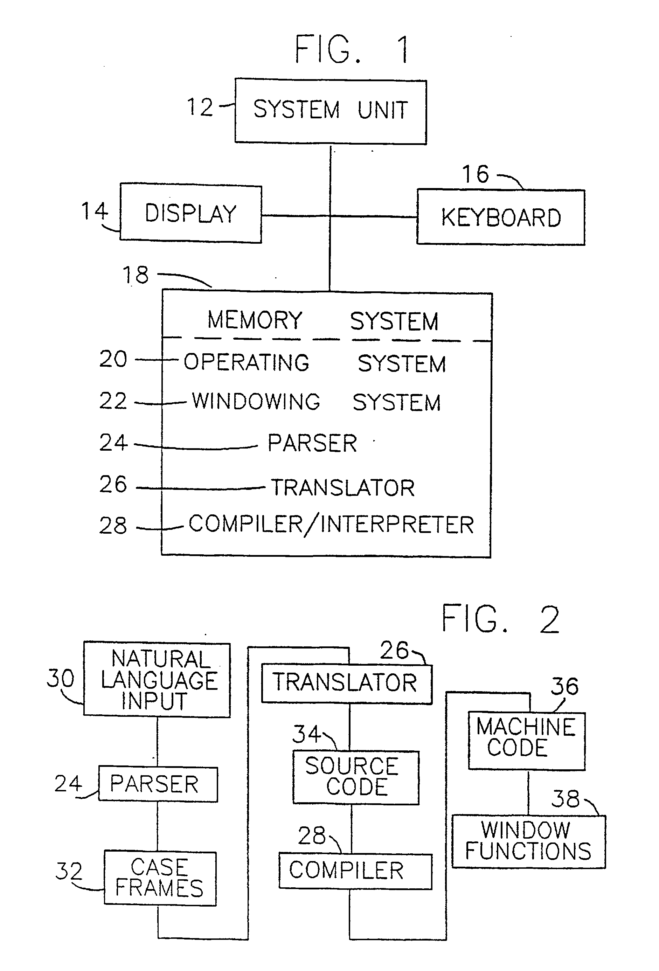

Referring now to the drawings and first to Fig. 1, the invention is embodied in data processing apparatus, such as a personal computer, which comprises a system unit 12, a display 14, a keyboard 16, and a memory system 18 all of which are interconnected. Stored in memory system 18 are an operating system 20, a windowing system 22, a parser 24, a translator 26, and a compiler or interpreter 28. Except for parser 24 and translator 26, all of the other elements are well known, prior art items. The personal computer may be an IBM Personal System/2 computer provided with a DOS version 3.x operating system 20. ("IBM" and "Personal System/2" are trademarks of International Business Machines Corporation). Windowing system 22 may be the above-mentioned JAWS windowing system. System unit 12 includes a processor which executes programs that are stored in the memory system. Such memory system includes conventional devices (not shown) such as read only memory, random access memory, cache, hard disc and floppy disc as appropriate to the particular model computer being used. Keyboard 16 is used to input information from the user into the system, and display 14 outputs information from the system to the user. For the purposes of this invention, the keyboard is used by a programmer to enter programs being created into the system.

The general purpose of the invention is to simplify the process of developing an application program for a windowing system. The general method by which this is done is first described, and then specific examples illustrating such simplification are described. The method assumes that a compiler is used for the source code.

Referring to Fig. 2, the process begins in step 30 with a programmer inputting into the system both windowing directives and application code. The windowing directives are expressed as sentences in natural language and are identified by predetermined flags to distinguish the directives from the application code statements. The windowing directives specify the function(s) which the programmer desires to occur and are expressed using words and grammar the same as is used in everyday writing and speech. This means that there is some latitude in how different functions can be described, particularly by using synonyms and related words to describe the function(s). When natural language is used, a parser is used for analyzing the input statements and producing an output that is more formalized and in an intermediate form convertible to the programming language used to express windowing calls. The output from step 30 is provided to parser 24 which then translates the windowing directives into an intermediate form, namely case frames, that specify windowing functions in generic verbs or actions and related objects as described in more detail below. The application code is simply passed through the parser and intermixed with the case frames, the result being passed to translator 26.

Translator 26 translates the case frames intowindow calls that are those which the programmer would otherwise have to have provide to perform the same functions. The translator is a rule based translator of the type used in artificial intelligence systems. These window calls are specific to the windowing system 22 and are placed in line with the application code. The resultant output constitutes source code suitable for compiling. Should the windowing system be changed, the translator would also have to be changed but not the parser. The method then finishes with the source code being compiled by compiler 28 to create machine code 36 that is then executed in step 38 to perform the window functions and to run the application program.

The parsing and translation steps are preferably accomplished by using programs that are based on known principles of parsing and rule based analysis and which are adapted to a lexicon which describes the various windowing functions. The specific details of such programs are not germane to an understanding of the invention and are within the skill of the art, so that they will not be described. It is felt that the invention can be fully understood by providing certain examples. Each example begins with the source statements that the programmer writes and inputs into the system. Such statements include natural language directives that are converted in accordance with the invention into windowing system calls, and application code written in a programming language such as the well known C programming language. Next, case frames produced by the parser are presented. These case frames summarize the natural language directives in a more concise ACTION on OBJECT format. Finally, the source code output of the translating step is presented.

EXAMPLE 1. The purpose of this example is to display text in a window. The input statements are:

```
#    STATEMENT


0:   window_handle=window("Open window
     'INFO.WINDOW' and display 'Beginning
     Calculation'.");


1:   for (loop=0; loop<10; loop++) 0


2:        sum= sum + loop;


3:   window("Print 'Completed Calculation' in the
     window 'window_handle'.");
```

Parser 24 recognizes the flag window("...") on statements 0 and 3 and ignores (does not parse) statements 1 and 2. The case frame from statement 0 is:

```
CASE FRAME (1)


ACTION(1)      : open window
ARGUMENT(S)    : 'INFO.WINDOW'
RESULT         : window_handle
ACTION(2)      : print_to_window
ARGUMENT(S)    : 'Beginning Calculation',
                 window_handle
RESULT         : (none)
```

Case frame (1) denotes two sequential actions to be taken. First, a window is to be opened with a title bar of 'INFO.WINDOW'. Since opening a window returns a pointer to that window to be used for future reference to the window, window_handle is used to store the window's pointer. The second action is to output text in the window. The arguments to the print_to_window action are the text to be displayed and the window in which to display the text. Since there is no result from displaying text in a window, the result field of the second action is "none".

The case frame from statement 3 is:

```
CASE FRAME (2)


        ACTION              : print_to_window
        ARGUMENT(S)         : 'Completed Calculation',
                              window_handle
        RESULT              : (none)
```

Case frame (2)'s action is also print_to_window, which will display the text 'Completed Calculation' in the window pointed to by window_handle.

After the parser has generated the case frames, the translator is invoked. The function of translator 26 is to analyze the case frames and convert them into windowing system calls. The output of the translator is the source code program which is then compiled. In this Example (1), the translator produces the following source code (in pseudo-C syntax):

```
#      STATEMENT        COMMENTS (/*...*/)


0a:  jawsstart();    /* Initialize  the  graphics  screen*/
0b:  iotabletinit(pcmouse_1); /*  Initialize   the   mouse*/
0c:  iocursinit();   /*  Initialize  the  graphics  cursor*/
0d:  iodevpos(&x,&y);    /*  Get  x,y  position  of  mouse*/
0e:  font = jawsfont();   /* Get default font */
0f:  queryfont(font, &c_width, &c_height:    /* Get the
     width and height of font */
0g:  can = createcanvas(80, 2, fixchararray); /* Create a
     character canvas */
0h:  window_handle = titlewind(x, y, c_width*80,
     c_height*2, "INFO.WINDOW", NULL, white, 16, can,
     NULL);    /* Create a window with window position,
     with size, with title,linked to canvas 'can'*/
0i:  surface(window_handle);  /* Surface the window */
0j:  chrfont(font, can); /* Output  with  default  font  */
0k:  chrcursor(0, 0, can);    /*  Position   text   cursor*/
0l:  chrcharstring("Beginning Calculation", normal, can);
     /* Output text */
0m:  canupdate(can, true);    /* Translate changes to
     window */
1:    for (loop=0; loop<10; loop++)
2:        sum = sum + loop;
3a:  chrcursor(1, 0, can);    /* Position text cursor*/
3b:  chrcharstring("Completed Calculation", normal, can);
     /* Output text */
3c:  canupdate(can, true);    /* Translate changes to
     window */
```

In this example, a window is opened at the current mouse position. The window has a title bar of INFO.WINDOW. The height and width of the window is scaled to the size of the default font. Finally, the text is displayed. This example illustrates several points. First, the code that did not have the window("..") flag was unaffected by the translation process. Second, one natural language directive is expanded into multiple actions in the case frame and several lines of source code. Input statements 0 and 3 expanded into source code statements 0a-0m and 3a-3c respectively. In addition, the output of the translation process is ready to be compiled. The translation process produces the same windowing calls as an expert would. Finally, the translation process is done making certain default assumptions. For example, the window is opened at the current mouse position. Obviously, this does not have to be as there might be a specific location for all information windows. The translator assumes that the window should be scaled to a height of two characters, and that can be changed. In general, the assumptions made by the translator can be customized to the given windowing system.

Different translators can be used for different windowing systems and adds a layer of portability to current programming styles. The same code that translates to one windowing system could translate to another by replacing the translator section of the invention. A second benefit is that since the translator makes certain assumptions about how information is displayed, a certain uniformity of display is created. Every window is scaled similarly and all menus would look similar. The section of the translator that produces the final code must be customized to the specific programming language used. Different backends to the translator would be required for C, PASCAL, FORTRAN, etc. EXAMPLE 2. The purpose of this example is to select an item from a menu. The input statement is:

```
0:    selection=window("Open menu 'Command Menu' with the
      items 'RUN', 'STOP', and 'PAUSE'. Let user select one
      item and close the menu.")
```

The case frame from input statement 0 is:

```
          CASE FRAME (3)


                    ACTION(1)          : open menu
                    ARGUMENT(S)        : 'Command Menu'
                    RESULT             : (none)
                    ACTION(2)          : add_menu_item
                    ARGUMENT(S)        : 'RUN'
                    RESULT             : (none)
                    ACTION(3)          : add_menu_item
                    ARGUMENT(S)        : 'STOP'
                    RESULT             : (none)
                    ACTION(4)          : add_menu_item
                    ARGUMENT(S)        : 'PAUSE'
                    RESULT             : (none)
                    ACTION(5)          : select_menu_item)-
                    ARGUMENT(S)        : (none)
                    RESULT             : selection
                    ACTION(6)          : close_menu
                    ARGUMENT(S)        : (none)
                    RESULT             : (none)
```

Such case frame specifies several actions which are executed sequentially. A menu is first opened. Three menu items are added. The user is allowed to select an item. The selected item is returned in 'selection'. Finally, the menu is closed. Although no menu handle is specified, the translator will assume that all actions should occur on the same menu. After the parser has created the case frame, the translator produces the following source code:

| # | STATEMENT | COMMENTS |
|---|-----------|----------|

```
0a:  jawsstart();    /* Initialize the graphics screen */
0b:  iotabletinit(pcmouse_1);   /* Initialize the mouse*/
0c:  iocursinit();   /* Initialize the graphics cursor*/
0d:  iodevpos(&x,&y);    /* Get x,y position of mouse*/
0e:  font = jawsfont();   /* Get default font */
0f:  can = createcanvas(0, 3, pup);    /* Create a pop-up
     canvas */
0g:  entrynum=0;    /* Initialize entry counter */
0h:  popappend("RUN",font,2,can,&entrynum);   /* Add an
     entry to the menu */
0i:  popappend("STOP",font,2,can,&entrynum);   /* Add an
     entry to the menu */
0j:  popappend("PAUSE",font,2,can,&entrynum); /* Add an
     entry to the menu */
0k:  tmp_handle = popwind("Command Menu", font, can);   /*
     Create a pop-up window, font for title of window, and
     canvas for font */
0l:  canupdate(can, false);   /* Translate changes to
     window */
0m:  pop_pick_n_choose(x,y,&selection,strselection,tmp_
     handle);
```

In this case, the translator recognized that no menu handle was specified and thus created a temporary variable 'tmp__handle'.

A further instantiation of the invention is in an end-user application. For example, the invention may be used as a front-end to a database package, where results of database queries would be displayed in windows. As part of a database query, the user would specify placing the output of the query in a window.

EXAMPLE 3: The purpose of this example is to perform a database query against a bank's database of customers to find all customer's with balances greater than $1,000. The results are displayed in a window. The input is:

| # | Statement |
|---|-----------|

```
0:          r = query(balance, >, 1000);
1:          window("Display results 'r' in a window
            'RESULTS'.");
```

Parser 24 recognizes the flag window("...") on statement 1 and ignores (does not parse) statement 0. The above represents a single query of the database. The case frame from statement 1 is:

CASE FRAME (4)

```
ACTION(1)        : open_window
ARGUMENT(S)      : 'RESULTS'
RESULT           : (none)


ACTION(2)        : print_to_window
ARGUMENT(S)      : r, (none)
RESULT           : (none)
```

Case frame (4) denotes two sequential actions to be taken. First, a window is to be opened with a title bar of 'RESULTS'. No returned window handle is specified. The second action is to display the result from the database query, r, in the output window. Because both actions are in the same case frame, the second action will print the output in the window opened by the first action.

After the parser has completed the case frames, the translator is invoked. The function of translator 26 is to analyze the case frame and convert it into windowing system calls. The output of the translator is then sent, one function call at a time, to the windowing system for execution. In this Example (3), the translator produces the following series of function calls:

```
#      STATEMENT          COMMENTS


1a:    jawsstart();     /* Initialize  the  graphics  screen*/
1b:    iotabletinit(pcmouse_1); /*  Initialize  the  mouse*/
1c:    iocursinit();  /* Initialize  the  graphics  cursor*/
1d:    iodevpos(&x,&y);     /* Get  x,y  position  of  mouse*/
1e:    font = jawsfont();  /* Get default font */
1f:    queryfont(font, &c_width, &c_height);   /* Get the
       width and height of font */
1g:    can = createcanvas(80, 25, fixchararray); /*Create a
       character canvas */
1h:    tmp_handle = titlewind(x,y, c_width*80, c_height*25,
       "RESULTS",NULL,white,16, can, NULL); /* Create a
       window with window position, with size, with title,
       linked to canvas 'can'*/
1i:    surface(tmp_handle);     /* Surface the window */
1j:    chrfont(font, can);      /* Output with default font
       */
1k:    chrcursor(0, 0, can);    /* Position text cursor*/
1l:    chrcharstring(r, normal, can);    /* Output text */
1m:    canupdate(can, true);    /* Translate changes to
       window */
```

This type of system also integrates well with databases that currently use natural language front ends such as IBM's Intellect package.

The steps of the invention for an end-user application include the natural language input 30, the parsing of the natural language query by parser 24 to generate case frames 32, translation by translator 26, and windowed output using window functions 38. In this scenario, the translator's output is interpreted at execution time. The request to perform the database query is also interpreted at execution time. Thus, the compiler 28 and machine code 36 steps are done a step at a time at execution time rather than entirely before execution. This technique applies to all interpreted systems such as the BASIC language and interpreted LISP systems.

**Claims**

1. The method of operating data processing apparatus including a display and a windowing system for performing window functions on said display, said apparatus further including input means selectively operated by a user to input information into said apparatus, said method comprising the steps of:

operating said input means to input natural language windowing directives;

parsing said natural language windowing directives and creating therefrom case frames which generically specify different window functions in a manner independent of code specifically used by said windowing system;

and translating said case frames into windowing source code expressed in a programming language specific to said windowing system.

2. A method in accordance with claim 1, comprising

operating said input means to additionally enter application source code interspersed with said natural language directives;

parsing said application source code and outputting said application code in a form identical to its form prior to parsing;

and translating said case frames and said application source code from said parsing step to produce source code having application code interspersed with said windowing source code.

3. A method in accordance with claim 2 wherein said windowing source code comprises calls to different routines in said windowing system.

4. A method in accordance with claim 1 comprising:

inputting through said input means flags identifying said windowing directives;

and using said flags during said parsing step to analyze said directives.

5. A method in accordance with claim 2 comprising:

converting said windowing source code and said application code into machine code and executing said machine code in said apparatus to perform windowing functions in accordance with such windowing code.

6. A method in accordance with claim 1 wherein:

said windowing directives each includes a verb defining what action is to occur and one or more objects related to such action;

and said case frames comprise actions and objects corresponding to said verbs and objects in said directives.

# FIG. 1

12 — SYSTEM UNIT

14 — DISPLAY

16 — KEYBOARD

18 —

MEMORY    SYSTEM

20 — OPERATING    SYSTEM

22 — WINDOWING    SYSTEM

24 — PARSER

26 — TRANSLATOR

28 — COMPILER/INTERPRETER

# FIG. 2

30 — NATURAL LANGUAGE INPUT

26 — TRANSLATOR

36 — MACHINE CODE

24 — PARSER

34 — SOURCE CODE

38 — WINDOW FUNCTIONS

32 — CASE FRAMES

28 — COMPILER